# EUROPEAN PATENT APPLICATION

(11) **EP 0 841 798 A2**
(43) Date of publication of application: **13.05.1998**
(21) Application number: 97308620.0
(22) Date of filing: 28.10.1997
(51) Int. Cl.: H04M 3/54, H04Q 7/22

(54) **Call diversion**

(30) Priority: 07.11.1996 GB 9623238
(71) Applicant: NOKIA MOBILE PHONES LTD., 02150 Espoo (FI)
(72) Inventor: Kennard, Adrian, Bracknell, Surrey RG42 1FJ (GB); Squires, Peter, Camberley, Surrey GU15 4JE (GB); Lawrence, Peter, Wokingham, Berkshire RG40 1XF (GB)
(74) Representative: Haws, Helen Louise

(57) **Abstract**

A call diverting apparatus which automatically diverts or cancels a call diversion from a landline telephone to a mobile telephone depending on the location of the mobile telephone.

## Description

The present invention relates to apparatus and a method for call diversion.

It has been known since the introduction of mobile telephones that mobile telephone users may be contacted by calling either their mobile telephone via their mobile telephone number or their landline telephone via their landline telephone number (e.g. office telephone or home telephone). Recently, new telephone systems have made it possible for a mobile telephone user to set-up a call diversion such that all calls made to their landline telephone are diverted to their mobile telephone. This is typically used when a mobile telephone user is away from their landline telephone whereby any calls made to their landline telephone number will generally not be missed. Initiation and cancellation of this call diversion usually involves entering an appropriate code sequence into the landline telephone.

In an office environment where mobile telephone users frequently come and go from their desks, the use of call diversion from their desk telephone to their mobile telephone often involves initiating and cancelling the call diversion several times each day. In these situations it is natural for users to forget to set-up the call diversion when leaving their desk or to forget to revert back to the undiverted state when returning to their desk.

According to a first aspect of the present invention there is provided call diversion means comprising detecting means for detecting the presence or absence of a mobile telephone at a location, and influencing means responsive to the detecting means for influencing diversion to a mobile telephone number associated with the mobile telephone of calls made to a landline telephone number associated with a landline telephone.

According to a second aspect of the present invention there is provided a method of automatic call diversion comprising the steps of: detecting the presence or absence of a mobile telephone at a location, and initiating diversion to a mobile telephone number associated with the mobile telephone of calls made to a landline telephone number associated with a landline telephone when the mobile telephone becomes absent from the location.

The method or the call diversion means in accordance with the invention may provide the advantage that a call diversion can be enabled and/or disabled automatically in dependence on the location of the mobile telephone. Embodiments of the present invention can therefore overcome the drawbacks of the prior art, namely having to repeatedly type the divert codes manually into a telephone to influence the call diversion. In accordance with the invention detecting or sensing means may be provided for detecting or sensing the presence or absence of the mobile telephone from a particular location. Typically the mobile telephone will be a cellular telephone operating in, for example, a GSM cellular telephone network.

In accordance with the invention the call diversion means has influencing means which influence the call diversion. Suitably, the influencing means may provide an initiation and/or a cancellation of the call diversion from the landline telephone to the mobile telephone.

In accordance with the invention the call diversion may, for example, be influenced when the mobile telephone is present or absent from the location of the users office, the location of the users home, or perhaps the location of a vehicle to cancel call diversion to the mobile telephone whilst the user is driving. Most suitably, the location, from which the mobile telephone's presence or absence is detected, is the location of the landline telephone from which telephone calls may automatically be diverted. Ideally the location is the location or position of apparatus separate from the mobile telephone.

Furthermore, the detecting means and/or the influencing means is suitably provided in the apparatus that is separate from the mobile telephone.

The apparatus may suitably be a holder for a mobile telephone. This may provide the advantage that the call diversion may automatically be set active when the mobile telephone is out of the holder, typically when the user is mobile, and may automatically be cancelled when the mobile telephone is in the holder, typically when the user resides near a landline telephone. A common type of holder for a mobile telephone is a desktop charger stand which is designed to sit on a desk surface and to operate as a battery charger for the mobile telephone.

The detecting means may detect the presence or absence of the mobile telephone at the location based on the charging state of the mobile telephone. The advantage of this arrangement is that the call diversion means makes use of detection circuits which may already be present in the mobile telephone or in the battery charger. Therefore the implementation of such an arrangement would not involve adding further detection circuits to the battery charger or the mobile phone thus saving space and cost.

Suitably the influencing means for influencing the call diversion is coupled to the landline associated with the landline telephone number. This allows the influencing means to send signals down the landline for influencing the diversion of calls. Furthermore, in one embodiment in accordance with the invention the coupling to the landline enables programming of the call diversion means via the landline.

In accordance with the invention, the landline telephone associated with the landline telephone number may optionally be a telephone operating in the Public Switched Telephone Network (PSTN), a telephone operating in a Wireless Local Loop (WLL) telephone system, or a telephone operating in a Private Automatic Branch Exchange (PABX). Accordingly, the landline telephone number may be an extension number in a Private Branch Exchange (PBX) or the landline telephone number may be provided in a Wireless Local Loop (WLL) telephone system. The term landline refers to any permanent or semi-permanent telephone line. The term landline telephone includes any landline telephone apparatus capable of being telephoned using a landline telephone number, for example, a fax machine, a modem, or a cordless telephone.

The method in accordance with the invention may further include the step of cancelling the call diversion when the mobile telephone becomes present at the particular location.

Embodiments of the invention will now be described, by way of example, with reference to the accompanying drawings, in which:

Figure 1 is a diagram showing two landline telephones, a mobile telephone, a PBX, and a call diversion means in accordance with the invention.

Figure 2 is a diagram showing a landline telephone, a mobile telephone, a PBX, and a call diversion means in accordance with the invention.

Figure 3 is a diagram showing a cordless landline telephone, a mobile telephone, a PBX, and a call diversion means in accordance with the invention.

Figure 4 is a diagram showing a landline telephone, a mobile telephone, a Wireless Local Loop PBX, and a call diversion means in accordance with the invention.

Figure 5 is a simplified block diagram of an embodiment of the call diversion means in accordance with the invention.

Figure 6 is a detailed circuit diagram of the embodiment of the call diversion means shown in Figure 5.

Figure 7 is a flow chart representing an embodiment of the method in accordance with the invention.

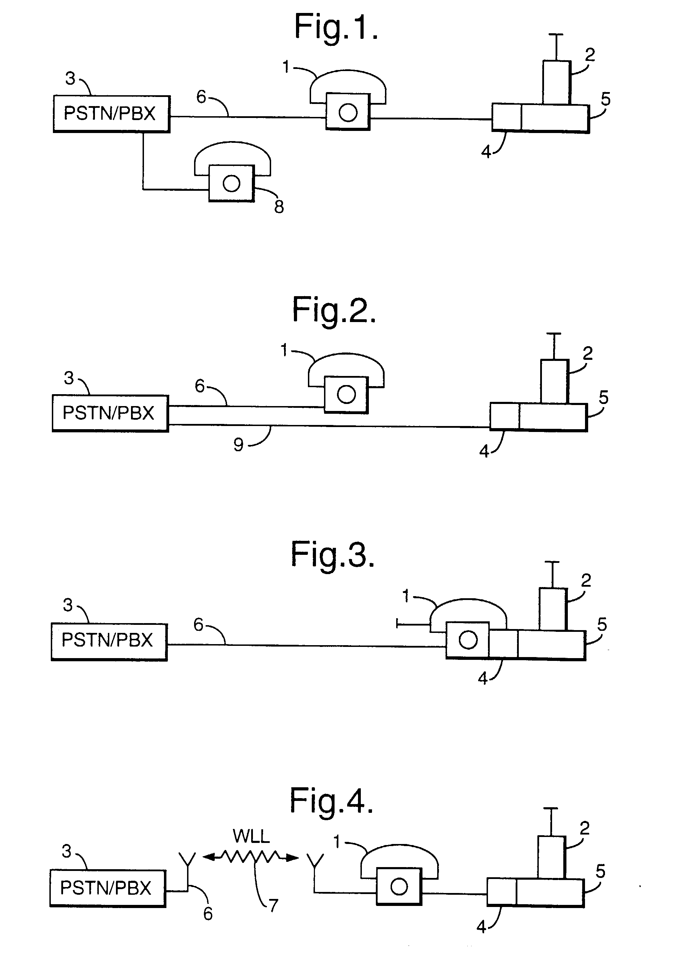

Referring to Figure 1 there is shown a landline telephone 1 connected to a Private Branch Exchange 3 (PBX) via a landline 6. The PBX may also service a number of other landline telephones (extensions) as indicated in Figure 1 by a further landline telephone 8. Each of the landline telephones 1, 8 has an associated or respective landline telephone number (extension number) unique to the particular landline.

The landline telephone 1 is also connected via a wire to a desktop charger stand 5 allowing the desktop charger stand 5 to couple to the landline 6 via the landline telephone 1. The desktop charger stand 5 is designed to accommodate a mobile telephone 2 such that when the mobile telephone is situated in the stand, as shown in Figure 1, the battery of the mobile telephone is charged. Electrical power is supplied to the charger to enable it to perform this charging. The mobile telephone 2 may be a cellular telephone operating in a cellular telephone network and has associated with it a unique mobile telephone number.

In accordance with the invention, the desktop charger stand also includes call diversion means 4 for activating and/or cancelling a call diversion from the landline telephone 1 onwards to the mobile telephone 2.

When the mobile telephone 2 is removed from the desktop charger stand 5 a detection circuit in the call diversion means 4 detects the change in charging status of the mobile telephone 2 from charge 'on' to charge 'off'. The call diversion means then responds to this change by initiating diversion to the mobile telephone number of calls made to the landline telephone number of the landline telephone 1. The initiation of the call diversion is achieved by the call diversion means 4 in three steps. Step 1 involves opening or 'seizing' the landline 6, equivalent to going off-hook in a conventional landline telephone. Step 2 involves sending the necessary divert codes, in the form of DTMF signals, down the landline to inform the PBX that all calls made to the landline telephone are to be diverted to the mobile telephone number. Step 3 involves closing the landline 6, equivalent to going on-hook in a conventional landline telephone.

Similarly, in accordance with the invention, when the mobile telephone 2 is replaced back into the desktop charger stand 5 the detection circuit in the call diversion means 4 detects the change in charging status of the mobile telephone 2 from charging 'off' to charging 'on'. The call diversion means then responds to this change by cancelling the diversion to the mobile telephone number of calls made to the landline telephone number of the landline telephone 1. The cancellation of the call diversion is achieved by the call diversion means 4 as before in three steps. Step 1 involves opening or seizing the landline 6, equivalent to going off-hook in a conventional landline telephone. Step 2 involves sending the necessary undivert codes, in the form of DTMF signals, down the landline to inform the PBX to cancel all call diverts for that particular landline telephone number. Step 3 involves closing the landline 6, equivalent to going on-hook in a conventional landline telephone.

Figures 2, 3, and 4 show other embodiments of the call diversion means. In Figure 2 the call diversion means 4 is coupled to a different landline 9 from the landline 6 serving the landline telephone 1. Provided the call diversion means is suitably programmed with information identifying landline 6 then activation of the call diversion is still possible via the landline 9 to divert to the mobile telephone 2 calls made via landline 6 to the landline telephone 1. Figure 3 shows an embodiment of the call diversion means 4 in which the landline telephone 1, the call diversion means 4, and the desktop charger stand 5 are all provided in the same housing. Also in this embodiment, the handset of the landline telephone 1 is in the form of a cordless handset. Figure 4 shows an embodiment in which the landline 6 includes a wireless connection 7 to the PBX or the local exchange of the PSTN, commonly referred to as a Wireless Local Loop (WLL).

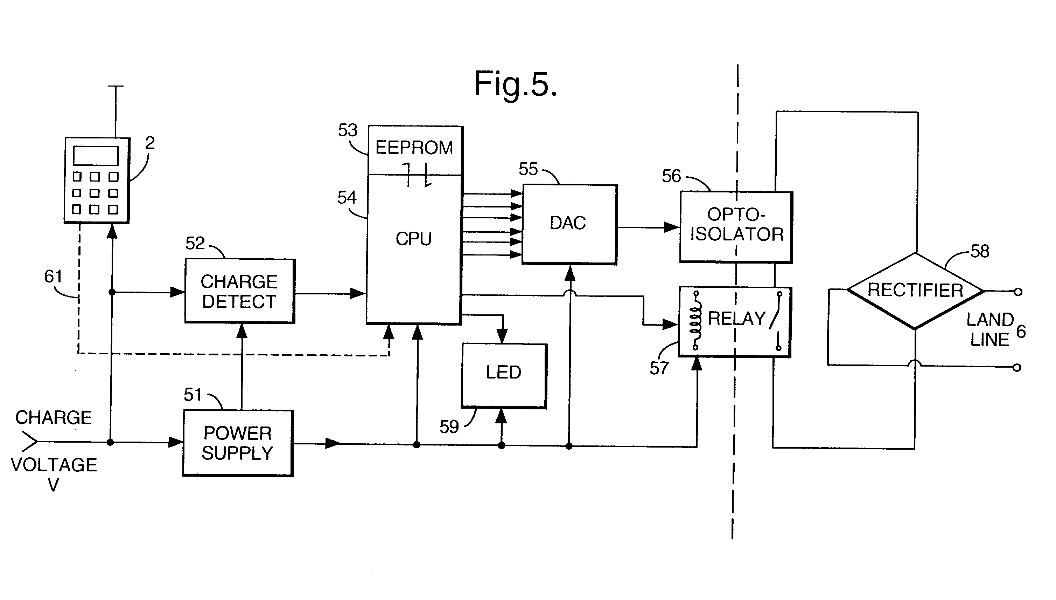

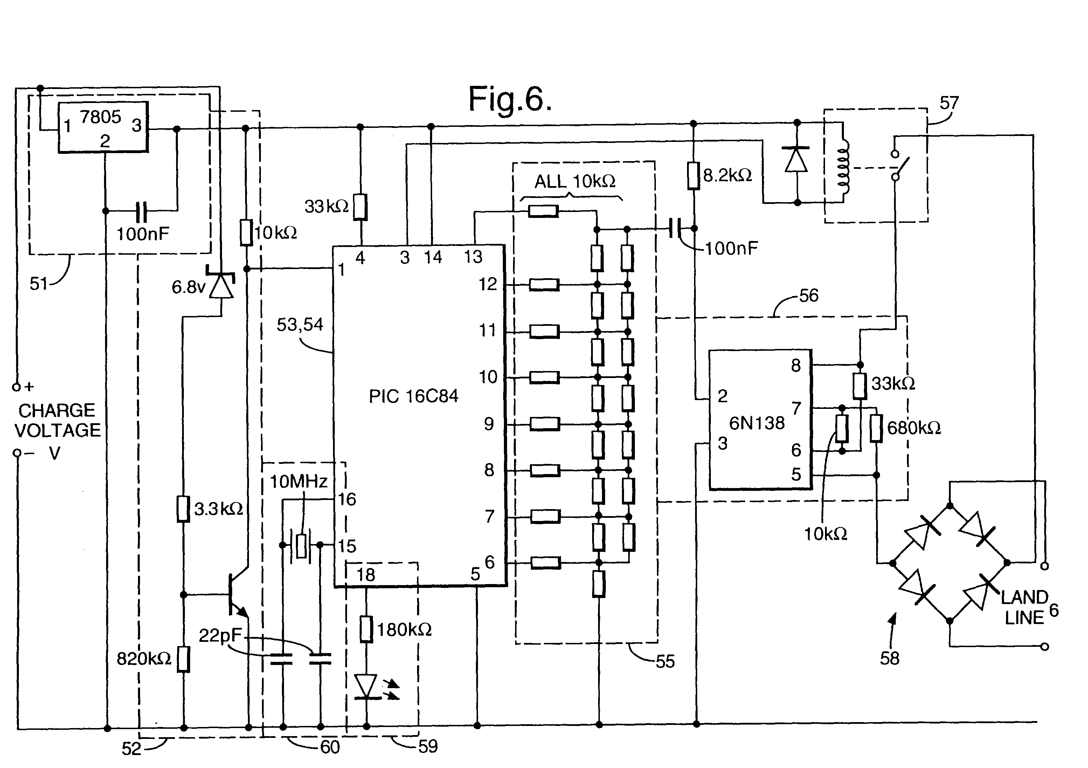

Referring now to Figure 5 there is shown a block diagram of an embodiment of the call diversion means. Referring also to Figure 6 there is shown a circuit diagram detailing the embodiment shown in Figure 5. The embodiment is designed for implementing in a mobile telephone charger such as the desktop charger of Figure 1.

A charge voltage V is supplied to a charging circuit located in the mobile telephone 2 which operates to charge the battery of the mobile telephone. The charge voltage V is supplied at 12 volts with a current limitation of 800 mA. When the mobile telephone is absent from the charger the charging voltage remains at the 12 volt level. However, when the mobile telephone is situated in the charger and is being charged, the current limiter acts to reduce the voltage level of V to below 10 volts. The charge voltage V also powers the various components of the call diversion means via a power supply 51 which regulates the variable voltage V down to a steady 5 volts.

A charge detect circuit 52 is provided as part of the call diversion means to detect when the mobile telephone is being charged. When the charge voltage V is above 10 volts, i.e. when the mobile telephone is absent from the charger, the transistor of the charge detect circuit 52 switches 'on' and consequently the voltage at terminal 1 of the CPU is low. Conversely, when the charge voltage V is below 10 volts, i.e. when the mobile telephone is situated in the charger, the transistor of the charge detect circuit 52 switches 'off' and consequently the voltage at terminal 1 of the CPU is high. Thus, a high voltage at the CPU terminal 1 relates to the mobile telephone being present and a low voltage at the CPU terminal 1 relates to the mobile telephone not being present.

In some cases, the charging circuit located in the mobile telephone operates in two different modes. In the first mode the uncharged battery is 'fast' charged such that the charging circuit remains on continuously and the voltage level of V remains continuously below 10 volts. In the second mode the charged battery is 'trickle' charged such that the charging circuit is pulsed on and accordingly the voltage level of V pulses below 10 volts. In these cases a pulsed high voltage at the CPU terminal 1 or a continuous high voltage at the CPU terminal 1 both relate to the mobile telephone being present.

The CPU 54 operates to control the functions of the various components of the call diversion means and is itself regulated by a CPU clock 60 running at 10 Mhz (see Figure 6). By constantly monitoring the voltage present at the input terminal 1, the CPU determines whether there is a change in the charging status of the mobile telephone 2. In accordance with the invention, when the charging state changes from charging to not charging, i.e. the voltage at terminal 1 changes from high to low, the CPU initiates call diversion. Conversely when the charging state changes from not charging to charging, i.e. the voltage at terminal 1 changes from low to high, the CPU cancels call diversion.

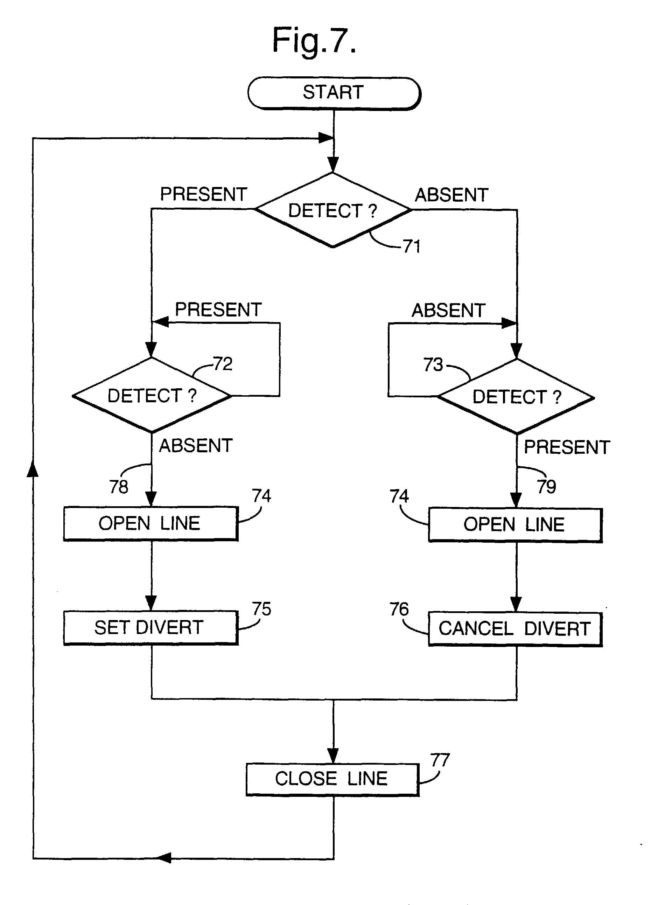

The flowchart in Figure 7 provides an illustration of the processes that may be performed by the CPU. The decision boxes 71, 72, and 73 represent one method by which the CPU determines if the mobile telephone has departed from or has arrived at the location of the charger stand. The arrow 78 pointing downwards from the decision box 72 indicates that the mobile telephone -has left the location of the charger stand and that consequently initiation of call diversion is required. The arrow 79 pointing downwards from the decision box 73 indicates that the mobile telephone has returned to the location of the charger stand and that consequently cancellation of call diversion is required.

Initiation of the call diversion is performed by CPU as follows. Firstly the CPU activates the relay 57 by letting the voltage on pin 3 go low. Activation of the relay results in the relay switch closing which opens or 'seizes' the landline 6, equivalent to going off-hook in a conventional telephone (see Figure 7, step 74). The telephone code required for activating the call diversion is read by the CPU from a pre-programmed memory address in EEPROM 53. Each digit of the telephone code is then digitally synthesised by the CPU into a respective DTMF tone which is output to the digital to analogue converter 55 (DAC). The EEPROM may also include a look-up table for supplying to the CPU the sine wave values of the dual tones produced during the digital synthesis. The binary DTMF tone is output from the CPU along pins 6 to 13 and is converted by a simple R-2R ladder DAC into an analogue voltage signal (see Figure 6). In order to comply with the regulation standards for the use of landlines, the DTMF tone generation circuit must be isolated from the landline 6. This is achieved by passing the DTMF signals through a commonly available opto-isolator circuit 56. Alternatively, a simple transformer would be equally suitable for use as an isolator for the DTMF signal. (The isolation of the landline also explains the requirement for using a relay switch to open or 'seize' the landline 6). Once all the numbers of the call diversion code have been sent in turn along the landline then the call diversion will be activated by the exchange (see Figure 7, step 75). Finally the voltage of the pin 3 of the CPU is raised to de-activate the relay, thus closing the landline 6 (see Figure 7, step 77). The CPU then resets itself ready for the arrival of the mobile telephone once more.

Cancellation of the call diversion is similar to the initiation of the call diversion, the difference being that the telephone code retrieved from the EEPROM by the CPU is the telephone code required for cancelling the call diversion as opposed to the telephone code required for activating the call diversion (see Figure 7, steps 74, 75, and 76).

A bridge rectifier 58 is provided as an interface to the landline to allow for reversal in polarity of the landline.

The CPU may be provided by a microcontroller (e.g. PIC 16C84) which are known to be small in size and relatively inexpensive. The EEPROM unit 53 is ideally integrated into the microcontroller as shown in Figure 6. The microcontroller may be suitably pre-programmed to provide all the features discussed in relation to Figures 5 and 6. Furthermore, the microcontroller may also be re-programmed with different divert and undivert codes to allow for changes in the mobile telephone number. Re-programming may be achieved via a data connection 61 between the mobile telephone 2 and the CPU (see Figure 5), whereby the new divert and undivert codes may be entered into the keypad of the mobile telephone or be automatically downloaded from predetermined memory locations in the mobile telephone. Alternatively reprogramming may be achieved via the landline, preferably using the landline telephone 1 associated with the landline (see Figure 1). Using this approach the call diversion means would be set to program mode and the landline telephone 1 used to dial the call diversion code followed by the divert cancel code. In this way the call diversion status quo would be maintained. To implement this method the call diversion means would be provided with a DTMF decoder, and the isolator circuit 56 would be bi-directional.

The call diversion means may also be provided with several improvements. These include an LED 59 which may provide an indication of the charging status of the charger plus an indication of when the landline is being used (see Figure 5). Also, the call diversion means may include detectors for ensuring that call diversion is not initiated or cancelled while the landline is in use or alternatively to ensure that there is a dial tone before sending any divert or undivert codes. Furthermore, the call diversion means may include detectors for detecting confirmation codes sent by the exchange upon altering the call diversion status.

The charger incorporating the call diversion means may also allow calls to the mobile phone to be diverted to the fixed line when deep discharging of the mobile phone battery is occurring

It will be evident in view of the foregoing description that various modifications may be made within the scope of the present invention. For example the call diversion means may be wholly or partly situated within the mobile telephone.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during prosecution of this application or of any such further application derived therefrom.

## Claims

1. Call diversion means comprising
detecting means for detecting the presence or absence of a mobile telephone at a location, and
influencing means responsive to the detecting means for influencing diversion to a mobile telephone number associated with the mobile telephone of calls made to a landline telephone number associated with a landline telephone.

2. Call diversion means as claimed in claim 1, wherein the influencing means initiates diversion to a mobile telephone number associated with the mobile telephone of calls made to a landline telephone number associated with a landline telephone.

3. Call diversion means as claimed in claim 1 or claim 2, wherein the influencing means cancels diversion to a mobile telephone number associated with the mobile telephone of calls made to a landline telephone number associated with a landline telephone.

4. Call diversion means as claimed in any preceding claim, wherein the location is the location of apparatus separate from the mobile telephone.

5. Call diversion means as claimed in claim 4, wherein the detecting means is provided by the apparatus.

6. Call diversion means as claimed in claim 4 or claim 5, wherein the influencing means is provided by the apparatus.

7. Call diversion means as claimed in any one of claims 4 to 6, wherein the apparatus is a holder for a mobile telephone.

8. Call diversion means as claimed in any one of claims 4 to 7, wherein the apparatus is a battery charger for the mobile telephone.

9. Call diversion means as claimed in any preceding claim, wherein the detecting means detects the presence or absence of the mobile telephone at the location based on the charging state of the mobile telephone.

10. Call diversion means as claimed in any preceding claim, wherein the influencing means is coupled to the landline associated with the landline telephone number.

11. Call diversion means as claimed in claim 10, wherein the influencing means sends signals down the landline for influencing the diversion of calls.

12. Call diversion means as claimed in any preceding claim, wherein the landline telephone number is an extension telephone number in a Private Branch Exchange (PBX).

13. Call diversion means as claimed in any preceding claim, wherein the landline associated with the landline telephone number is provided in a Wireless Local Loop (WLL) telephone system.

14. A method of automatic call diversion comprising the steps of:
detecting the presence or absence of a mobile telephone at a location, and
initiating diversion to a mobile telephone number associated with the mobile telephone of calls made to a landline telephone number associated with a landline telephone when the mobile telephone becomes absent from the location.

15. A method as claimed in claim 14, further comprising the step of:
cancelling the call diversion when the mobile telephone becomes present at the location.
